# EUROPÄISCHE PATENTSCHRIFT

(11) **EP 1 723 263 B1**
(45) Veröffentlichungstag und Bekanntmachung des Hinweises auf die Patenterteilung: **24.03.2010**
(21) Anmeldenummer: 05714971.8
(22) Anmeldetag: 11.02.2005
(51) Int. Cl.: C22C 9/02, C22C 1/04

(54) **GESINTERTER GLEITLAGERWERKSTOFF, GLEITLAGERVERBUNDWERKSTOFF SOWIE DESSEN VERWENDUNGEN**
SINTERED PLAIN BEARING MATERIAL, PLAIN BEARING COMPOSITE MATERIAL AND USES THEREOF
MATIERE FRITTEE POUR PALIER LISSE, MATIERE COMPOSITE POUR PALIER LISSE ET UTILISATIONS DE CELLES-CI

(30) Priorität: 11.03.2004 DE 102004011831
(43) Veröffentlichungstag der Anmeldung: 22.11.2006
(73) Patentinhaber: Federal-Mogul Deva GmbH, 35260 Stadtallendorf (DE)
(72) Erfinder: ROOS, Udo, 35315 Homberg (DE); KRAFT, Erik, 35260 Stadtallendorf (DE); KOCH, Thilo, 37115 Duderstadt (DE)
(74) Vertreter: Fuchs
(86) Internationale Anmeldenummer: PCT/DE2005/000252
(87) Internationale Veröffentlichungsnummer: WO 2005/087958

(56) Entgegenhaltungen:
- DE-A1- 10 138 058
- GB-A- 2 352 483
- US-A1- 2003 008 169
- PATENT ABSTRACTS OF JAPAN Bd. 2000, Nr. 25, 12. April 2001 (2001-04-12) & JP 2001 234265 A (TEIKOKU CARBON KOGYO KK), 28. August 2001 (2001-08-28)

## Beschreibung

Die Erfindung betrifft einen gesinterten Gleitlagerwerkstoff aus einer Kupferlegierung. Die Erfindung bezieht sich auch auf einen Gleitlagerverbundwerkstoff sowie auf Verwendungen des Gteitiagetwerkstoffs bzw. des Gleitlagerverbundwerkstoffes.

Für die Herstellung von Gleitlagern werden je nach Anforderungsprofil unter anderem Aluminiumlegierungen oder Kupferlegierungen mit entsprechenden Zusatzkomponenten verwendet. Als weiche Komponente wird Blei zugesetzt, um die Einbettfähigkeit zu verbessern.

Für Trockenlaufanwendungen bei kleinen Gleitgeschwindigkeiten werden Kupfer-Zinn-Blei-Legierungen mit Graphitanteilen verwendet. Wegen der toxischen Eigenschaften von Blei wird nach Ersatzstoffen gesucht, ohne dass die bisher erreichten Vorteile des Gleitlagermaterials aufgegeben werden müssen.

Um hier Abhilfe zu schaffen, wird in der EP 0 224 619 A1 für ölgeschmierte Lagerschalen in Verbrennungsmotoren vorgeschlagen, bei Kupferlegierungen den Bleianteil zu reduzieren oder gänzlich wegzulassen und stattdessen Wismut zu verwenden. Bei Belastungstests mit Kupfer-Blei- und Kupfer-Wismut-Lagem mit vergleichbaren Volumenanteilen an Blei und Wismut konnte sogar eine Verbesserung zu Gunsten der Kupfer-Wismut-Legierung festgestellt werden.

Es wird daher in der EP 0 224 619 A1, insbesondere auch zur Verbesserung der Korrosionsbeständigkeit, ein Wismutanteil von 5 bis 25 Gew.% genannt, wobei zusätzlich noch bis zu 10 Gew.% Zinn, bis 1 Gew.% Blei, sowie Silber, Antimon, Zink, Phosphor oder Nickel enthalten sein können.

Diese Legierungen, die auf einen Stahlrücken gesintert werden, gegossen oder gewalzt sein können, zeigten die besten Eigenschaften, wenn sie 12 bis 18 Gew.% Wismut, 1 bis 3% Zinn und 0,5% Blei aufweisen. Bei einem Verzicht auf Blei werden Wismutanteile sogar im Bereich von 12 bis 20 Gew.% und Zinnanteile von 1 bis 2 Gew.% genannt.

Aufgrund der hohen Anteile an Wismut und den damit verbundenen hohen Kosten besteht der Wunsch, unter Beibehaltung der positiven Eigenschaften preiswerte Gleitlagermaterialien zu finden..

Die US 2003/0008169 A1 offenbart einen durch Sintern hergestellten porösen Gleitlagerwerkstoff aus einer Kupferlegierung mit der Zusammensetzung 1,5 bis 15 Gew.% Sn, 1,5 bis 15 Gew.% Bi und 1,5 bis 20 Gew.% Festschmierstoff. Der Gleitlagerwerkstoff ist mit einem Trägermaterial aus Stahl verbunden.

Es ist daher Aufgabe der Erfindung, preiswerte, gesinterte Gleitlagerwerkstoffe auf Kupfer-Zinn-Wismut-Basis mit verbesserten tribologischen Eigenschaften und erhöhter Festigkeit bei Mikrobewegungen anzubieten.

Diese Aufgabe wird mit einem gesinterten Gleitlagerwerkstoff gelöst, der gekennzeichnet ist durch 10 bis 15 Gew.% Zinn, 0,5 bis 10 Gew.% Wismut, 5 bis 12 Gew.% Graphit und Rest Kupfer, wobei der Zinnanteil > dem Wismutanteil ist und der Graphit eine Körnung mit 99% < 40 µm aufweist.

Der erfindungsgemäßen Lösung liegt die überraschende Erkenntnis zugrunde, dass der Wismutanteil deutlich gesenkt werden kann, wenn Graphit zugegeben und der Zinnanteil angehoben wird. Da Zinn und Graphit preiswerter als Wismut sind, können durch die erfindungsgemäße Lösung die Kosten für die Herstellung des Gleitlagerwerkstoffs deutlich gesenkt werden. Außerdem kann auch auf Blei verzichtet werden, was gemäß des Standes der Technik zumindest bei den geringen Wismutanteilen erforderlich war. Es wird somit ein preiswerter bleifreier Werkstoff geschaffen, der deutlich bessere tribologische Eigenschaften aufweist.

Durch die Verringerung des Wismutanteils und eine Erhöhung des Zinn- und Graphitanteils bleibt der Matrixanteil, nämlich der des Kupfers, weitgehend unverändert, was den Vorteil mit sich bringt, dass die Festigkeit gegenüber den bekannten Gleitlagerwerkstoffen mit hohem Wismutanteil unverändert bleibt. Der Zinnanteil liegt hierbei immer über dem Wismutanteil.

Der Graphit, der eine Körnung aufweist, bei der 99% des Graphits eine Körnung <40 µm aufweist, wird als f-Graphit bezeichnet und ist besonders dann von Vorteil, wenn eine mit dem Gleitlagerwerkstoff versehene Gleitschicht Mikrobewegungen ausgesetzt ist.

Wenn es sich um großräumige Gleitbewegungen handelt, ist der so genannte p-Graphit bevorzugt, der eine Körnung von 100 bis 600 µm aufweist. Eine bevorzugte Körnung liegt bei 100 bis 300 µm. Dieser Graphit wird als pf-Graphit bezeichnet.

Es ist bevorzugt, den Wismutanteil auf unter 5%, d.h. auf 0,8 bis <5 Gew.% einzustellen.

Ein weiterer bevorzugter Wismut-Bereich liegt bei 8 bis 10 Gew.%.

Der Zinnanteil liegt vorzugsweise bei >10 bis 13 Gew.% und besonders bevorzugt bei 11 bis 13 Gew.%.

Es hat sich gezeigt, dass die Zugabe von Graphit den Vorteil aufweist, dass die Verschleißfestigkeit sogar noch weiter gesteigert werden kann.

Vorzugsweise wird für den Graphitanteil Naturgraphit eingesetzt. Es ist auch möglich, synthetischen Graphit zu verwenden.

Der Gleitlagerwerkstoff kann als Vollmaterial hergestellt werden. In diesem Fall ist es von Vorteil, wenn das Gleitlagermaterial zusätzlich Sinterhilfsmittel aufweist. Als Sinterhilfsmittel sind 1 bis 3 Gew.% MoS₂ und/oder 0,5 bis 2 Gew.% CuP geeignet und bevorzugt.

Der Gleitlagerwerkstoff kann auch beispielsweise auf ein Trägermaterial aus Stahl oder Bronze aufgebracht werden. Es handelt sich in diesen Fällen um einen Gleitlagerverbundwerkstoff, wobei der Gleitlagerwerkstoff auf das Trägermaterial aufgesintert wird. Ein Sinterhilfsmittel wird in dieser Ausführung dem Gleitlagerwerkstoff nicht zugegeben.

Vorzugsweise wird der Gleitlagerwerkstoff bzw. der Gleitlagerverbundwerkstoff für Trockenlauflager eingesetzt. Eine weitere bevorzugte Verwendung ist der Einsatz für Radialgleitlager, Axialgleitlager, Gleitlager-Segmente, Gleitplatten, Gelenklager und/oder Lagerbuchsen.

Weitere bevorzugte Einsatzgebiete sind Off-Shore Technologie; Energiewirtschaft; Energieumwandlungsanlagen; Wasserkrafterzeugung; Windkrafterzeugung; Schiffsbau; Transportanlagen; Stahlindustrie (z. B. Roheisenherstellung; Walzanlagen); Kunststoffverarbeitungsmaschinen; Stahl-/Wasserbau; Automobilindustrie; Gummiverarbeitung; Fördertechnik; Ofenbau; Backofenbau.

Beispielhafte Ausführungsformen werden nachfolgend anhand der Zeichnungen erläutert.

Es zeigen:
- Fign. 1 bis 3: Druckfestigkeits- und Härtediagramme,
- Fign. 4 bis 11: Diagramme zum Oxidationsverhalten,
- Fign. 12 bis 15: Diagramme zum Reibungskoeffizienten, Verschleiß und zur Verschleißrate,
- Fign. 16 bis 19: Diagramme zum Verschleiß.

In der nachfolgenden Tabelle 1 sind bevorzugte Zusammensetzungen des Gleitlagerwerkstoffs aufgeführt.

**Tabelle 1**

| (Angaben jeweils in Gew.%) | | | | | | | |
|---|---|---|---|---|---|---|---|
| **Beispiel-Nr.** | **Cu** | **Sn** | **Bi** | **MoS₂** | **CuP** | **Graphit** | **Gesamt** |
| 1 | 77,36 | 12,26 | 1,89 | 2,83 | 0,00 | 5,66 | 100,00 |
| 2 | 75,93 | 12,04 | 1,85 | 2,78 | 0,00 | 7,41 | 100,00 |
| 3 | 74,55 | 11,82 | 1,82 | 2,73 | 0,00 | 9,09 | 100,00 |
| 4 | 73,21 | 11,61 | 1,79 | 2,68 | 0,00 | 10,71 | 100,00 |
| 5 | 78,30 | 12,26 | 1,89 | 1,89 | 0,00 | 5,66 | 100,00 |
| 6 | 76,85 | 12,04 | 1,85 | 1,85 | 0,00 | 7,41 | 100,00 |
| 7 | 75,45 | 11,82 | 1,82 | 1,82 | 0,00 | 9,09 | 100,00 |
| 8 | 74,11 | 11,61 | 1,79 | 1,79 | 0,00 | 10,71 | 100,00 |
| 9 | 78,30 | 12,26 | 2,83 | 0,00 | 0,94 | 5,66 | 100,00 |
| 10 | 76,85 | 12,04 | 2,78 | 0,00 | 0,93 | 7,41 | 100,00 |
| 11 | 75,45 | 11,82 | 2,73 | 0,00 | 0,91 | 9,09 | 100,00 |
| 12 | 74,11 | 11,61 | 2,68 | 0,00 | 0,89 | 10,71 | 100,00 |
| 13 | 79,25 | 12,26 | 1,89 | 0,00 | 0,94 | 5,66 | 100,00 |
| 14 | 77,78 | 12,04 | 1,85 | 0,00 | 0,93 | 7,41 | 100,00 |
| 15 | 76,36 | 11,82 | 1,82 | 0,00 | 0,91 | 9,09 | 100,00 |
| 16 | 75,00 | 11,61 | 1,79 | 0,00 | 0,89 | 10,71 | 100,00 |
| 17 | 79,25 | 12,26 | 0,94 | 0,00 | 1,89 | 5,66 | 100,00 |
| 18 | 77,78 | 12,04 | 0,93 | 0,00 | 1,85 | 7,41 | 100,00 |
| 19 | 76,36 | 11,82 | 0,91 | 0,00 | 1,82 | 9,09 | 100,00 |
| 20 | 75,00 | 11,61 | 0,89 | 0,00 | 1,79 | 10,71 | 100,00 |
| 21 | 71,70 | 12,26 | 8,49 | 1,89 | 0,00 | 5,66 | 100,00 |
| 22 | 70,37 | 12,04 | 8,33 | 1,85 | 0,00 | 7,41 | 100,00 |
| 23 | 69,09 | 11,82 | 8,18 | 1,82 | 0,00 | 9,09 | 100,00 |
| 24 | 67,86 | 11,61 | 8,04 | 1,79 | 0,00 | 10,71 | 100,00 |
| 25 | 71,70 | 12,26 | 9,43 | 0,00 | 0,94 | 5,66 | 100,00 |
| 26 | 70,37 | 12,04 | 9,26 | 0,00 | 0,93 | 7,41 | 100,00 |
| 27 | 69,09 | 11,82 | 9,09 | 0,00 | 0,91 | 9,09 | 100,00 |
| 28 | 67,86 | 11,61 | 8,93 | 0,00 | 0,89 | 10,71 | 100,00 |
| 29 | 77,36 | 12,26 | 4,72 | 0,00 | 0,00 | 5,66 | 100,00 |
| 30 | 75,93 | 12,04 | 4,63 | 0,00 | 0,00 | 7,41 | 100,00 |
| 31 | 74,55 | 11,82 | 4,55 | 0,00 | 0,00 | 9,09 | 100,00 |
| 32 | 73,21 | 11,61 | 4,46 | 0,00 | 0,00 | 10,71 | 100,00 |
| 33 | 80,19 | 12,26 | 0,94 | 0,00 | 0,94 | 5,66 | 100,00 |
| 34 | 78,70 | 12,04 | 0,93 | 0,00 | 0,93 | 7,41 | 100,00 |
| 35 | 77,78 | 12,04 | 0,93 | 1,85 | 0,00 | 7,41 | 100,00 |
| 36 | 75,45 | 11,82 | 0,91 | 2,73 | 0,00 | 9,09 | 100,00 |

In der nachfolgenden Tabelle 2 sind Werkstoffe mit Bleianteilen als Vergleichswerkstoffe aufgeführt.

**Tabelle 2**

| (Angaben jeweils in Gew.%) | | | | | | | |
|---|---|---|---|---|---|---|---|
| **Beispiel-Nr.** | **Cu** | **Sn** | **Pb** | **MoS₂** | **CuP** | **Graphit** | **Gesamt** |
| 37 | 78,30 | 12,26 | 2,83 | 0,00 | 0,94 | 5,66 | 100,00 |
| 38 | 77,78 | 12,04 | 1,85 | 0,00 | 0,93 | 7,41 | 100,00 |
| 39 | 76,85 | 12,04 | 1,85 | 1,85 | 0,00 | 7,41 | 100,00 |
| 40 | 74,55 | 11,82 | 1,82 | 2,73 | 0,00 | 9,09 | 100,00 |

Zu ausgewählten Beispielen wurden Vergleichsversuche durchgeführt.

### Vergleichsversuche Reibung und Verschleiß

### Tribologie-Prüfstand für oszillierend rotierende Bewegungen

| Parameter: | |
|---|---|
| Spez. Belastung | 10 MPa |
| Gleitgeschwindigkeit | 0,008 m/s |
| Gegenwerkstoff | Stahl mit der Werkstoffbezeichnung 1.2080 |
| Winkelbewegung | ±17,5 (Gesamtwinkel pro Zyklus 70°) |
| Probekörper | zylindrische Buchse Innendurchmesser 100 mm Außendurchmesser 130 mm Länge 50 mm |

### Verschleißversuche

### Tribologie-Prüfstand für rotierende Bewegungen

| | |
|---|---|
| Belastung | 2000 N |
| Gleitgeschwindigkeit | 0,05 m/s |
| Gegenwerkstoff | Stahl mit der Werkstoffbezeichnung C45 |
| Rotatorische Bewegung | 360° |
| Probekörper | zylindrischer Stift mit ø 20 mm und |
| | Länge 40 mm |

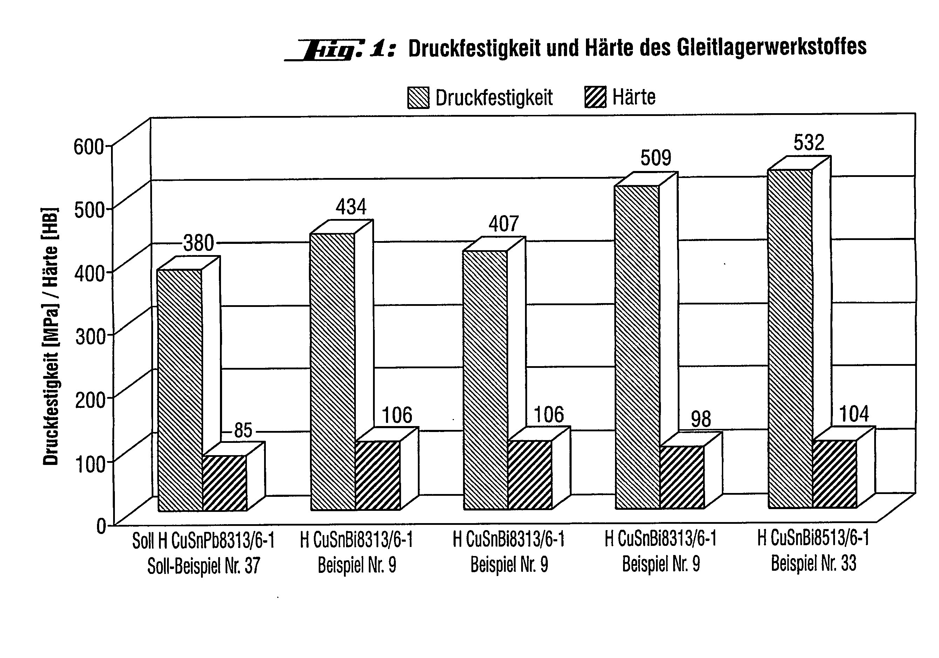

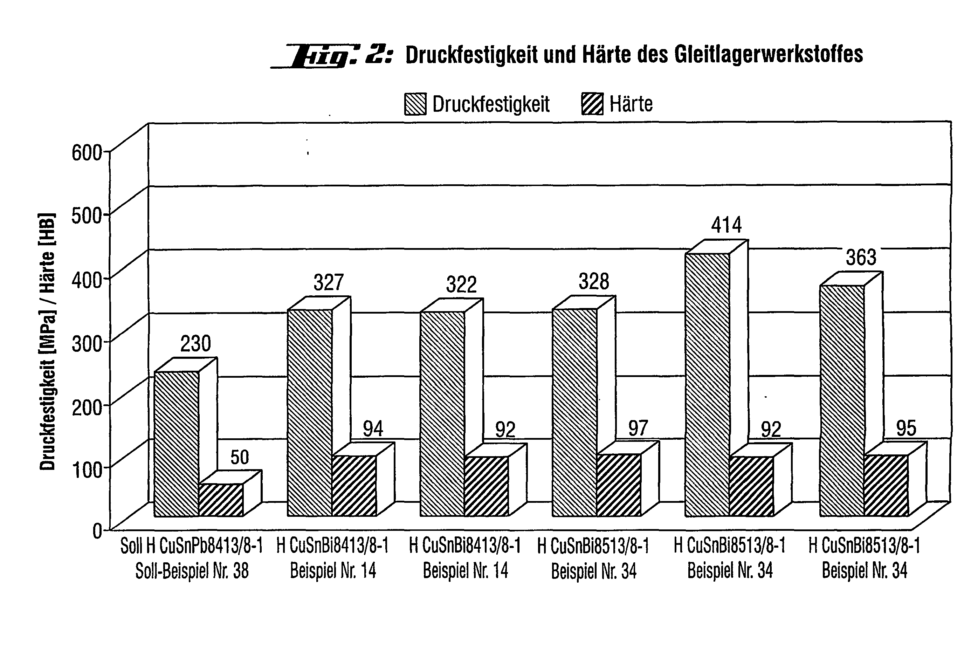

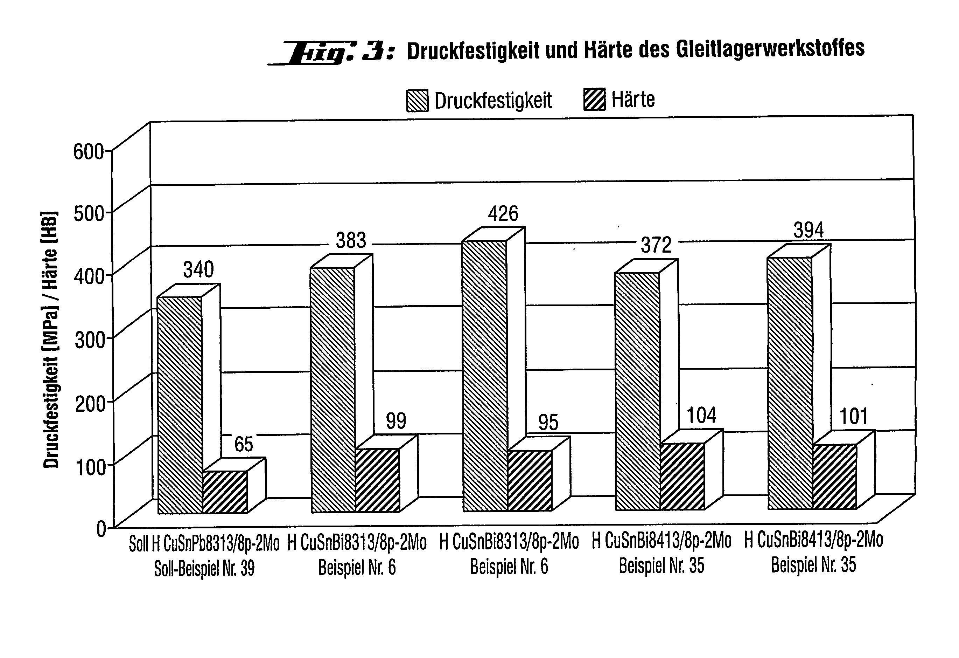

In den Figuren 1 bis 3 ist die Druckfestigkeit und Härte für jeweils eine bleihaltige Legierung und eine erfindungsgemäße Legierung dargestellt. Die Nummer der erfindungsgemäßen Legierung bezieht sich auf die Nummerierung in der Tabelle. Bezüglich der erfindungsgemäßen Legierung wurden jeweils vier Versuche durchgeführt. Es ist deutlich zu sehen, dass die Druckfestigkeit und die Härte gegenüber den Vorgabewerten für die bleihaltigen Werkstoffe gesteigert werden konnte.

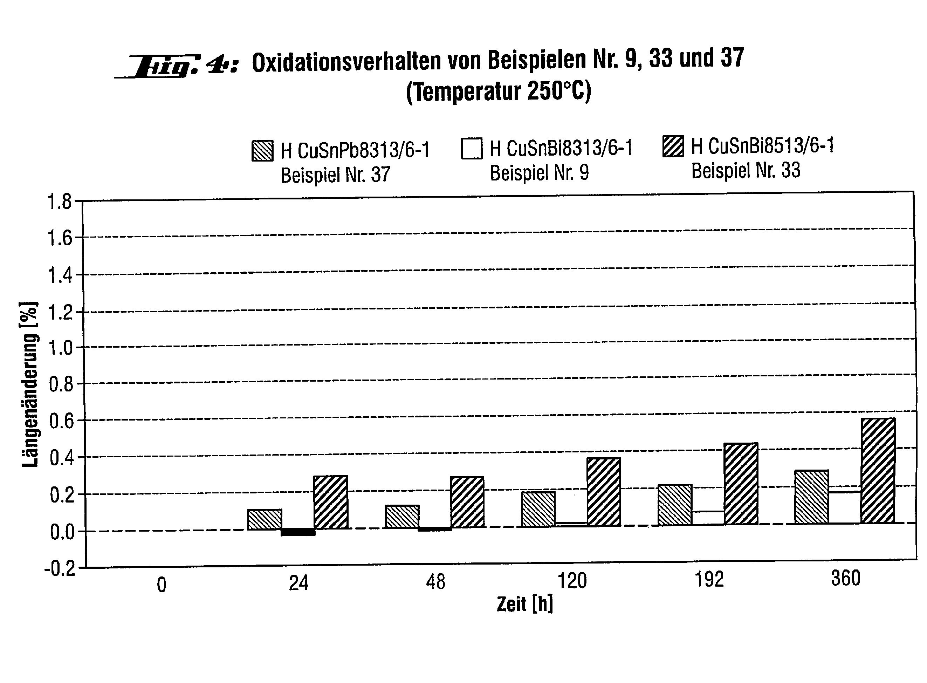

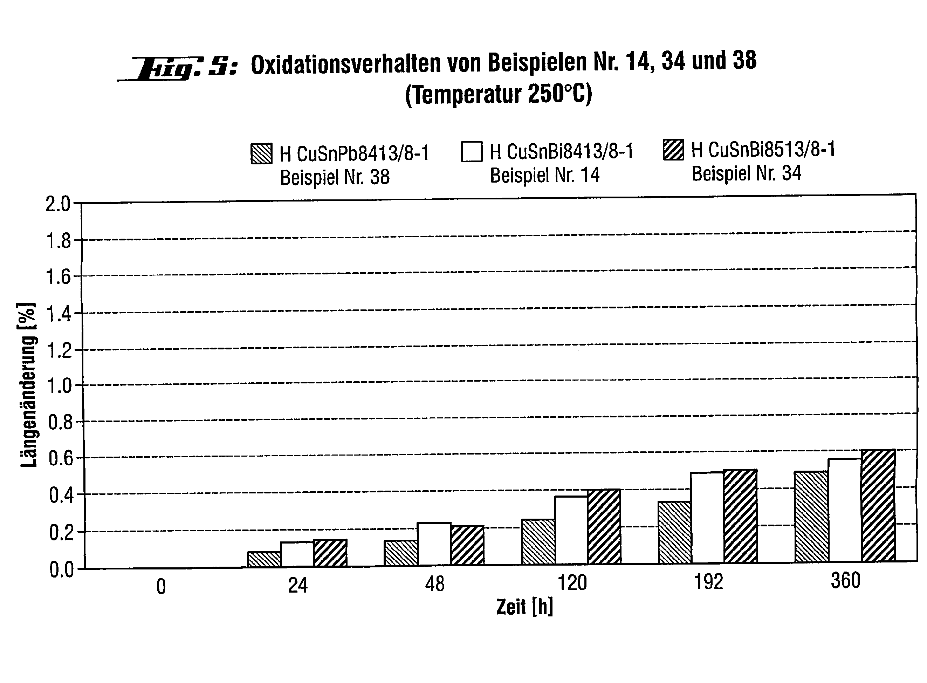

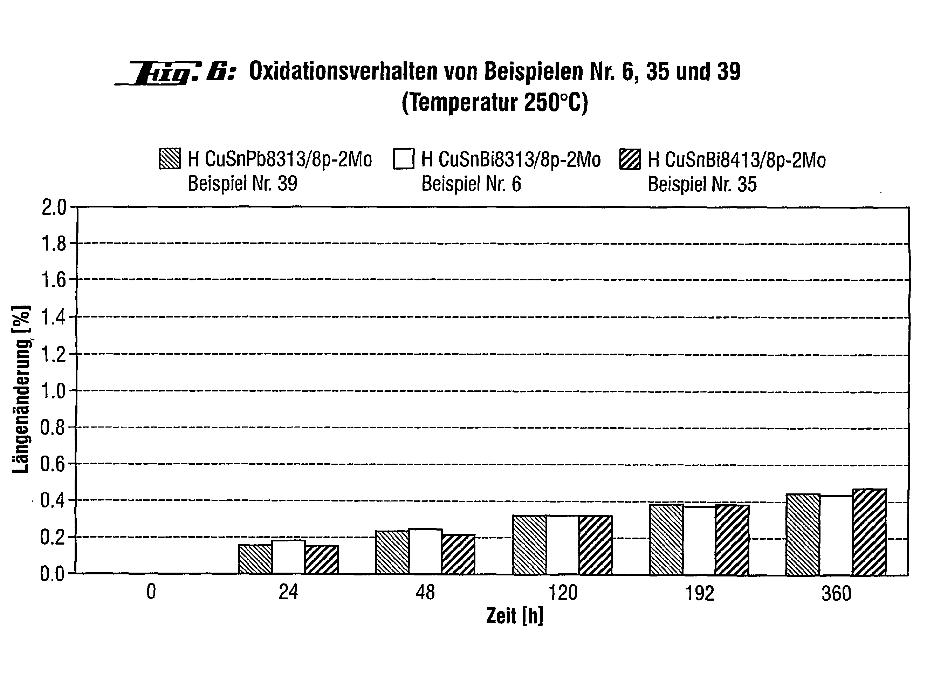

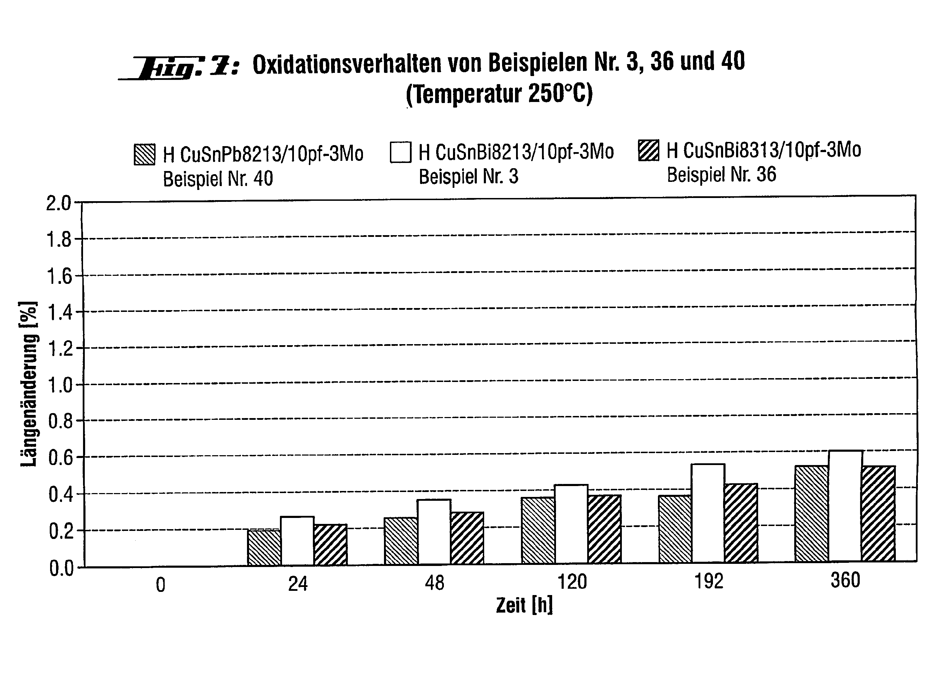

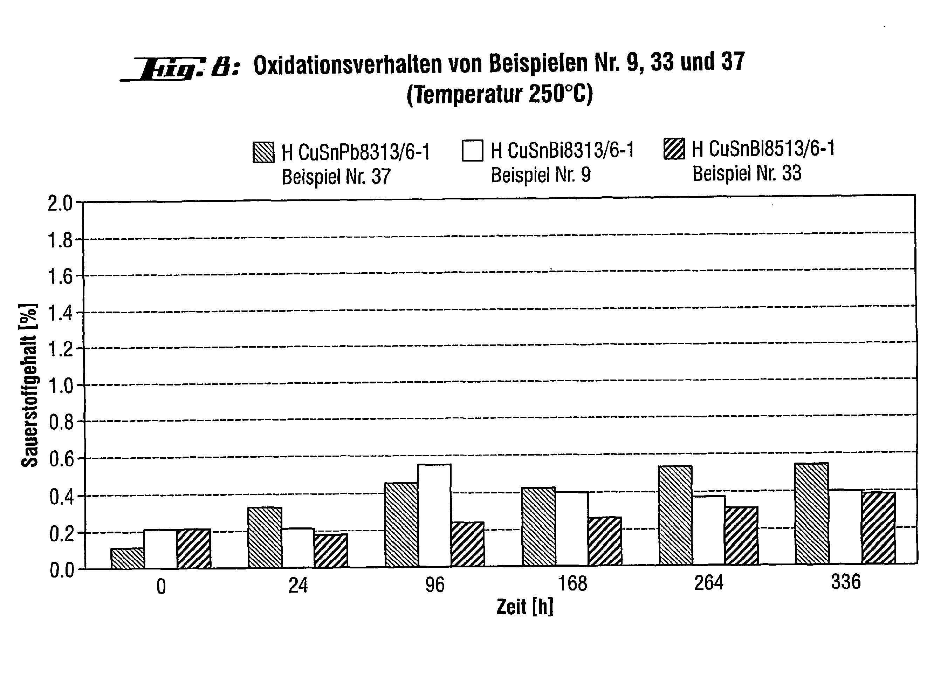

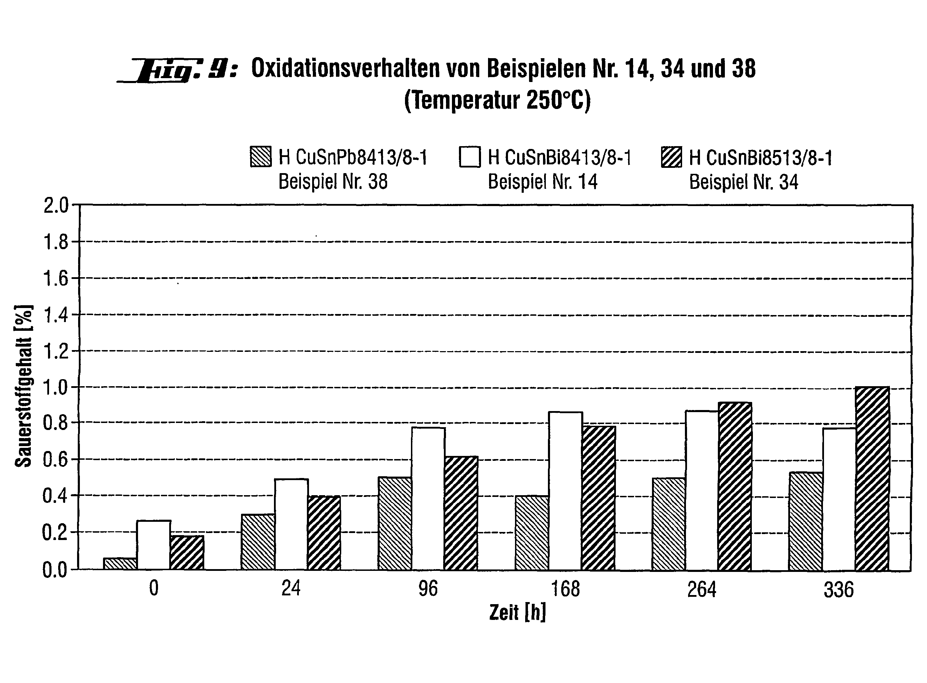

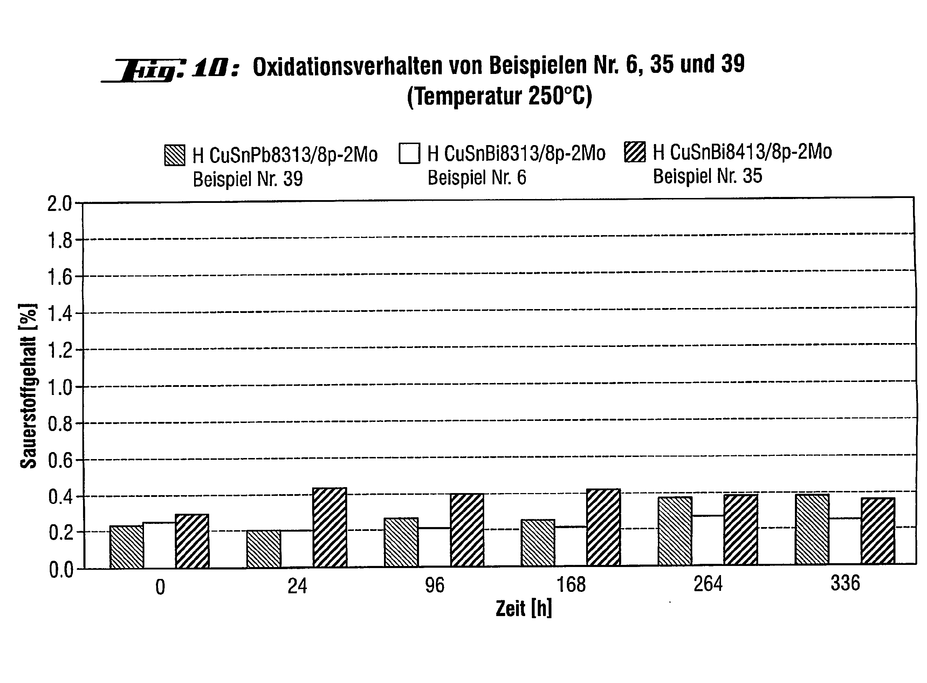

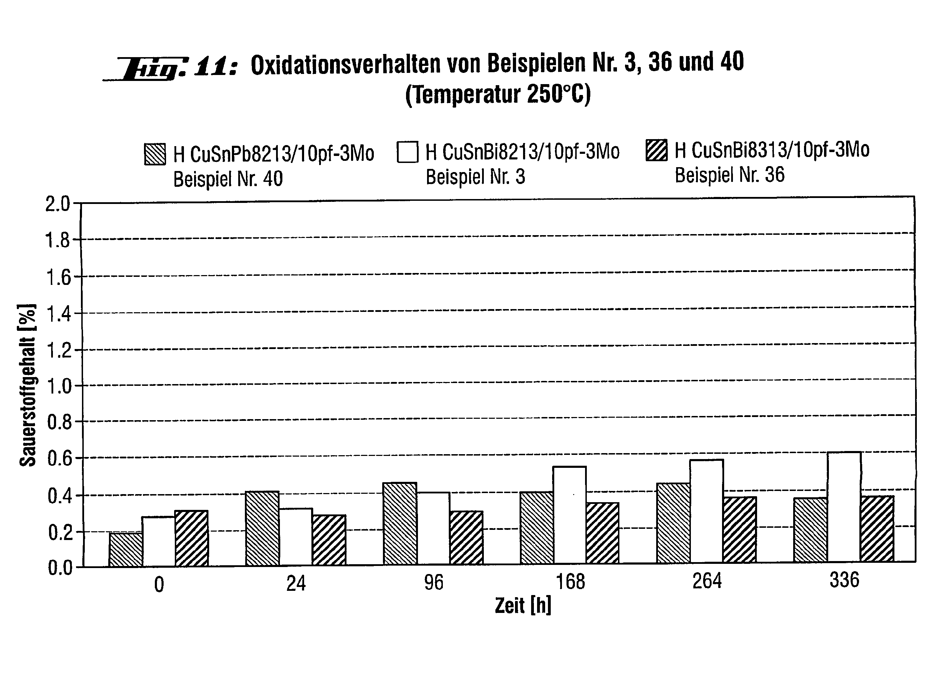

In den Figuren 4 bis 11 ist das Oxidationsverhalten zweier erfindungsgemäßer Gleitlagerwerkstoffe im Vergleich zu einem bleihaltigen Gleitlagerwerkstoff dargestellt. Das Oxidationsverhalten äußert sich in einer Längenänderung, was wiederum für die Maßhaltigkeit im Betrieb von Bedeutung ist. Es ist zu sehen, dass sich das Oxidationsverhalten der untersuchten Werkstoffe nicht wesentlich voneinander unterscheidet.

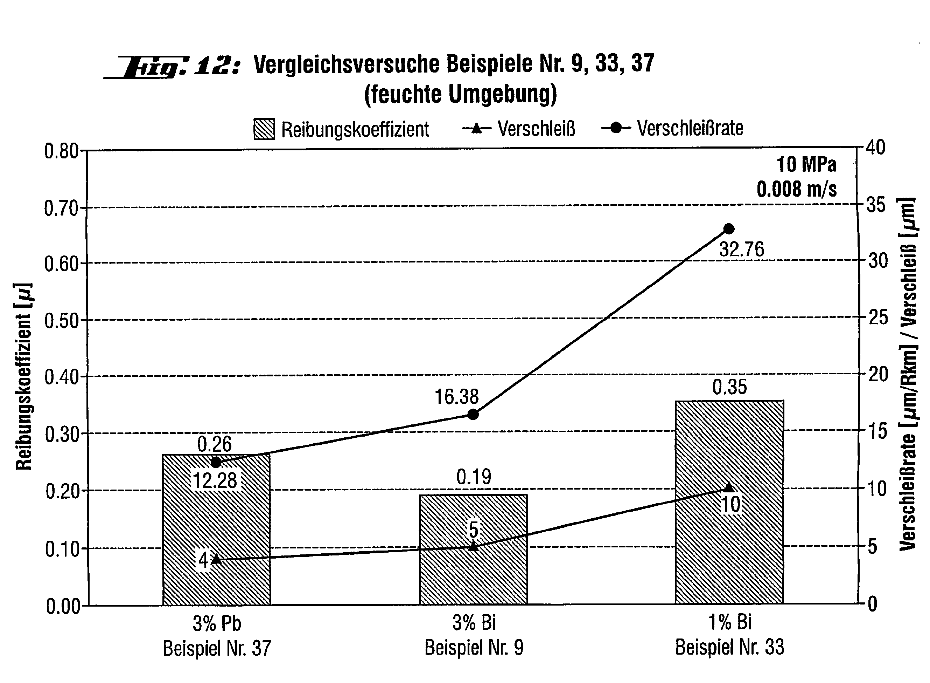

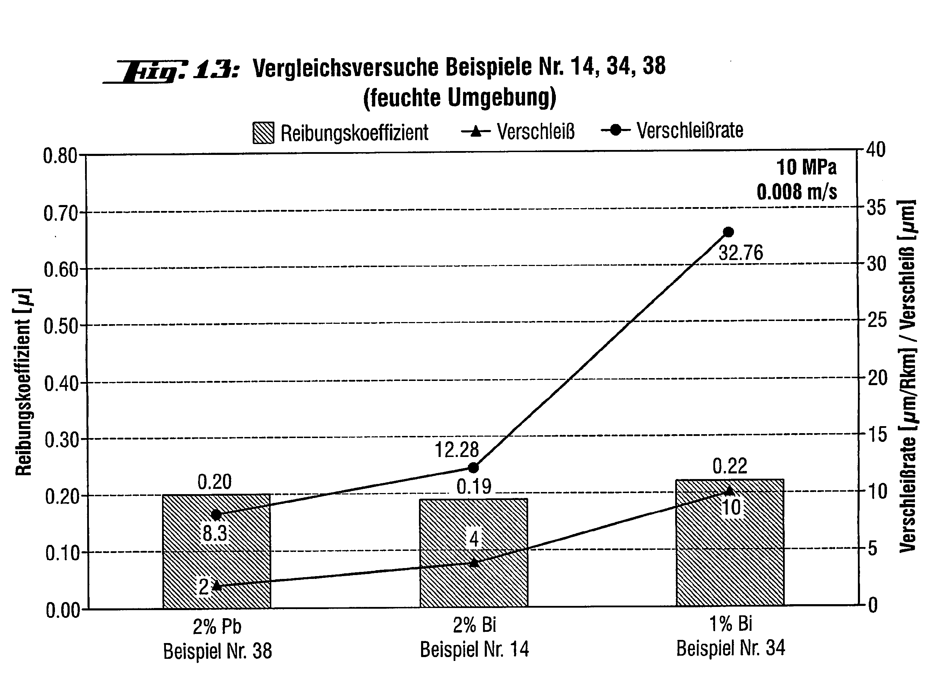

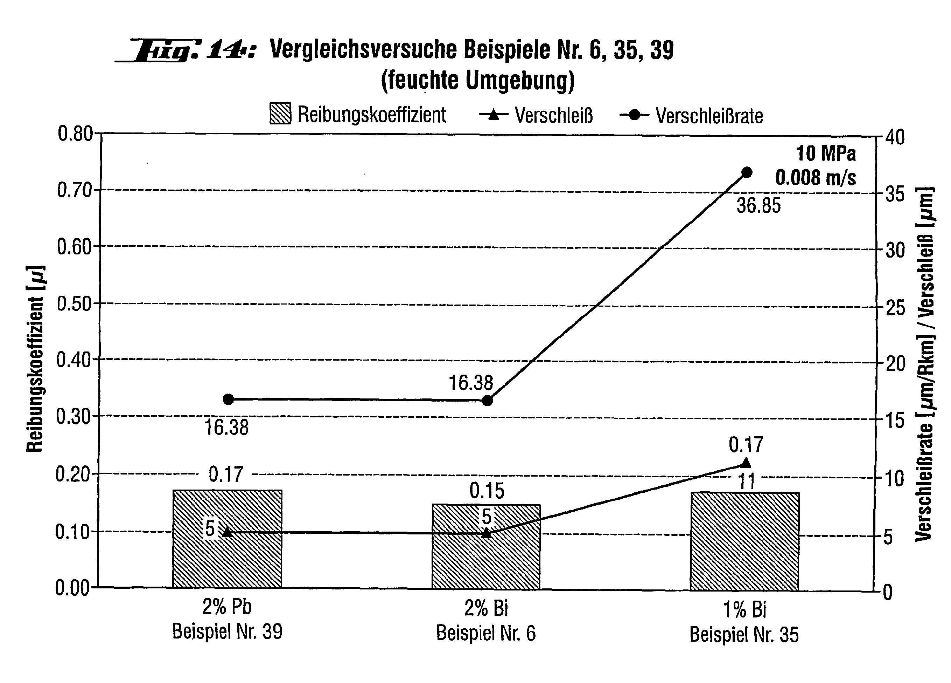

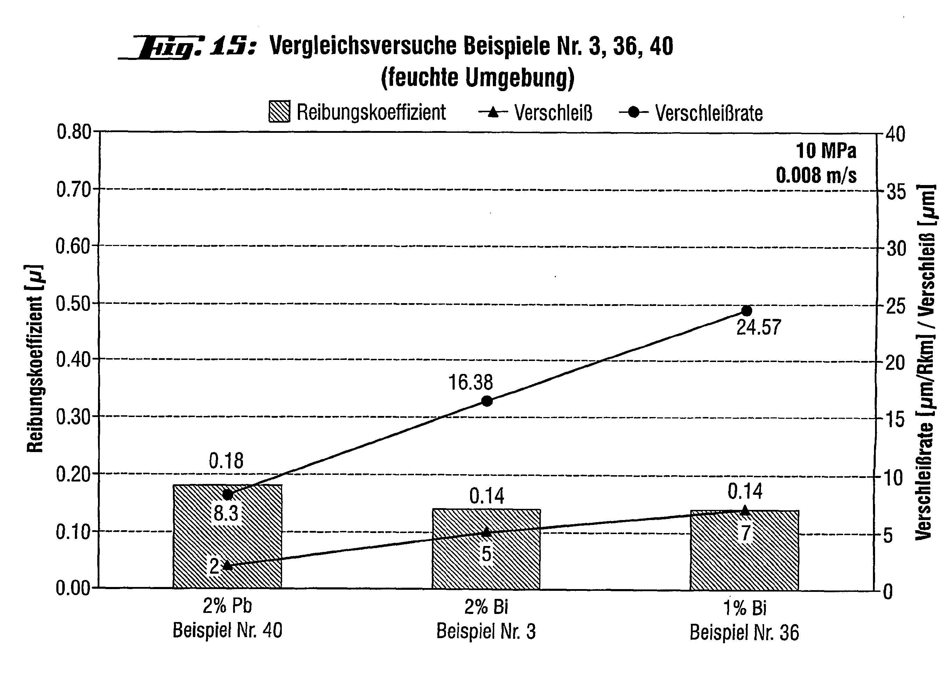

In den Figuren 12 bis 15 sind die Reibungskoeffizienten, der Verschleiß und die Verschleißrate für zwei erfindungsgemäße Gleitlagerwerkstoffe im Vergleich zu einem bleihaltigen Werkstoff dargestellt. Es ist deutlich zu sehen, dass bei Ersatz von Blei durch Wismut die Reibwerte leicht sinken, während die Verschleißwerte sich nicht wesentlich unterscheiden. Bei Reduzierung des Wismutgehaltes sind sowohl im Reibwert als auch im Verschleiß Steigerungen zu erkennen.

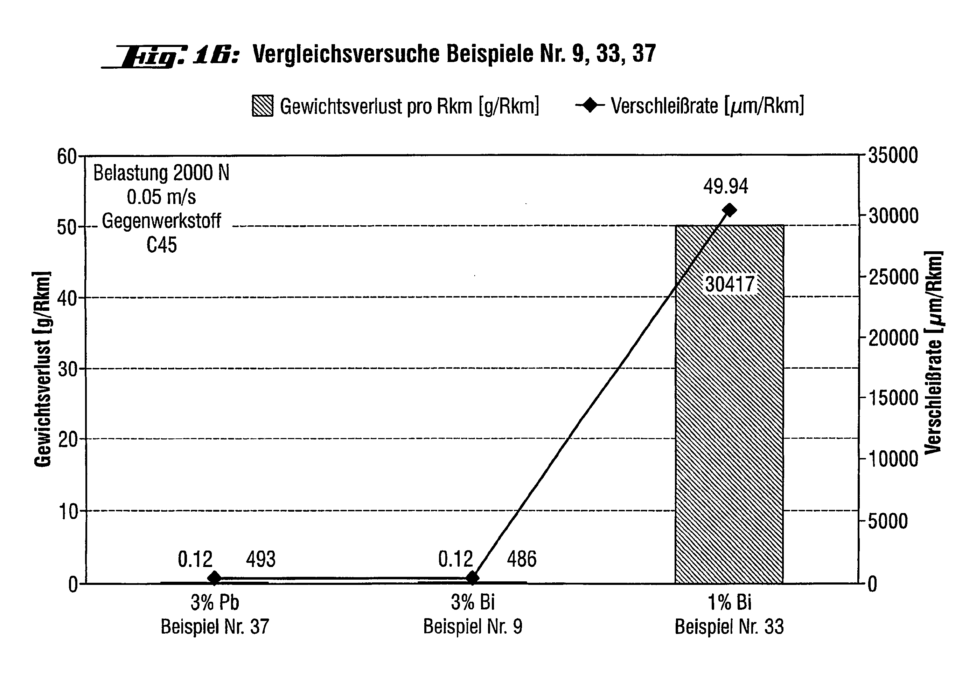

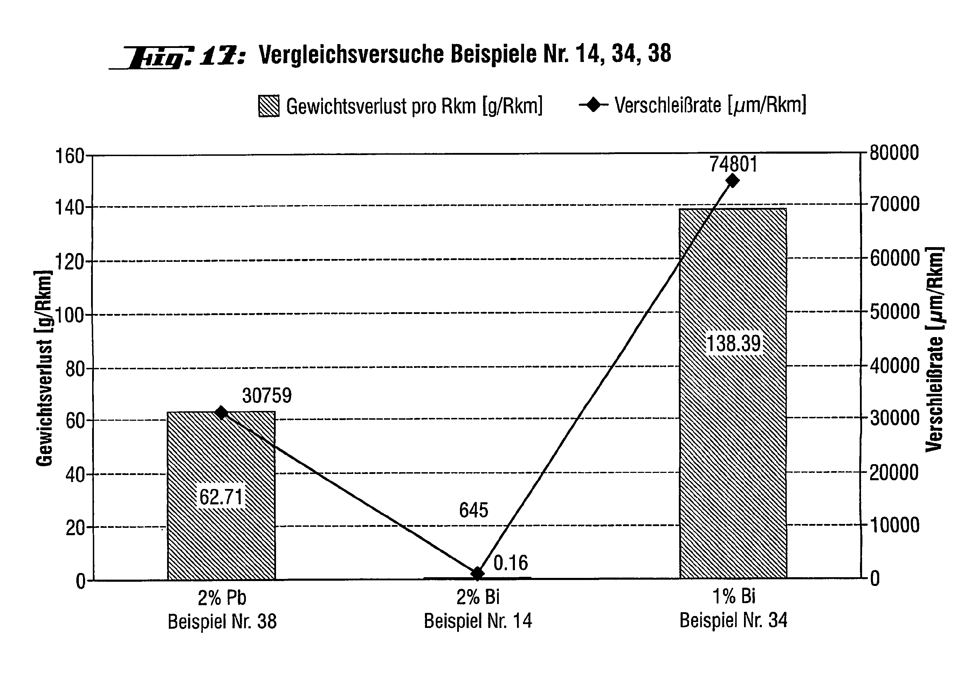

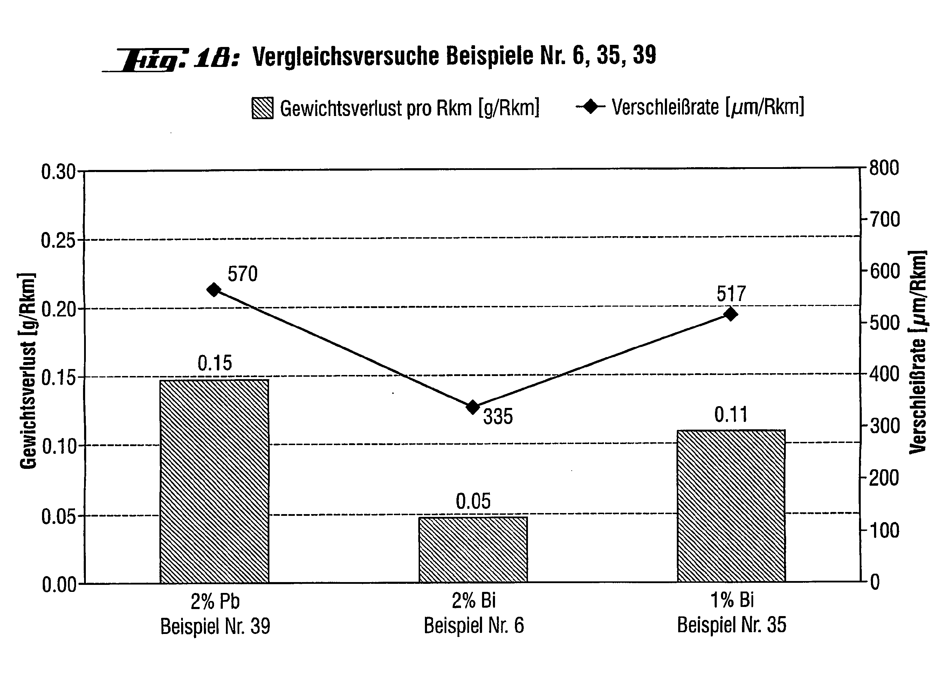

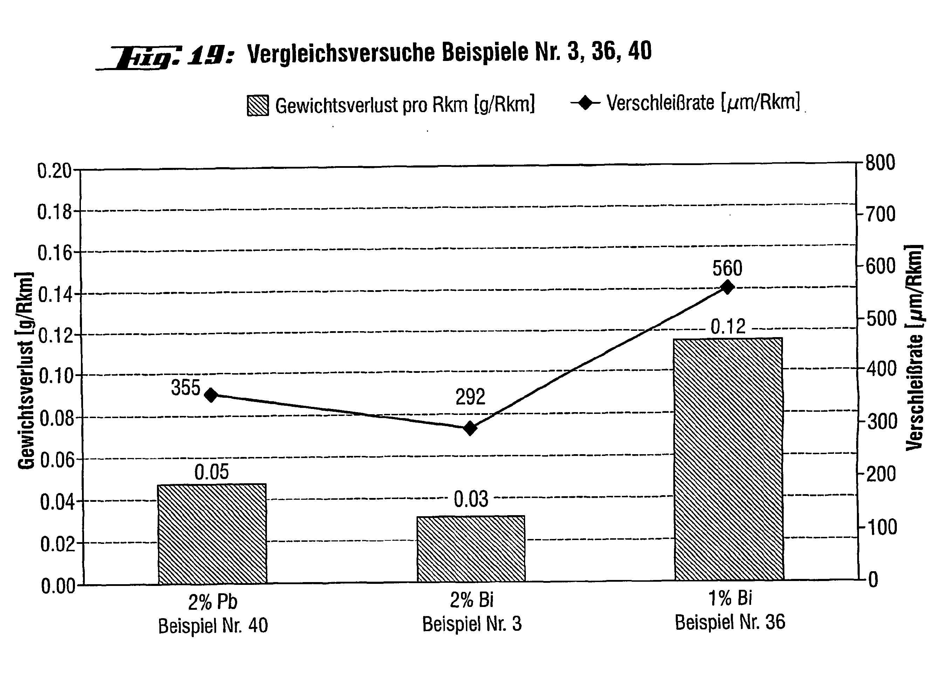

In den Figuren 16 bis 19 sind Verschleißversuche dargestellt, wobei der Gewichtsverlust und die Verschleißrate für jeweils zwei erfindungsgemäße Gleitlagerwerkstoffe im Vergleich zu einem bleihaltigen Gleitlagerwerkstoff dargestellt sind. Es ist zu sehen, dass bei einem Ersatz von Blei durch Wismut zum Teil erheblich bessere Verschleißwerte resultieren. Es zeigt sich auch, dass eine Verminderung des Wismutgehaltes zu höheren Verschleißwerten führt. Aus tribologischer Sicht scheinen die bevorzugten Wismutgehalte ein Optimum darzustellen.

## Patentansprüche

1. Gesinterter Trocken-Gleitlagerwerkstoff aus einer Kupferlegierung, **gekennzeichnet durch**
10 bis 15 Gew.% Zinn
0,5 bis 10 Gew.% Wismut
5 bis 12 Gew.% Graphit
Rest Kupfer,
wobei der Zinnanteil > dem Wismutanteil ist und der Graphit eine Körnung mit 99% <40 µm aufweist.

2. Gleitlagerwerkstoff nach Anspruch 1, **dadurch gekennzeichnet, dass** der Wismutanteil bei 0,8 bis <5 Gew.% beträgt.

3. Gleitlagerwerkstoff nach einem der Ansprüche 1 oder 2, **dadurch gekennzeichnet, dass** der Wismutanteil 8 bis 10 Gew.% beträgt.

4. Gleitlagerwerkstoff nach einem der Ansprüche 1 bis 3, **dadurch gekennzeichnet, dass** der Zinnanteil >10 bis 13 Gew.% beträgt.

5. Gleitlagerwerkstoff nach einem der Ansprüche 1 bis 4, **dadurch gekennzeichnet, dass** der Zinnanteil 11 bis 13 Gew.% beträgt.

6. Gleitlagerwerkstoff nach einem der Ansprüche 1 bis 5, **dadurch gekennzeichnet, dass** der Graphitanteil 5,66 bis 10,71 Gew.% beträgt.

7. Gleitlagerwerkstoff nach einem der Ansprüche 1 bis 6, **dadurch gekennzeichnet, dass** der Graphit Naturgraphit ist.

8. Gleitlagerwerkstoff nach einem der Ansprüche 1 bis 6, **dadurch gekennzeichnet, dass** der Graphit synthetischer Graphit ist.

9. Gleittagerwerkstoff nach einem der Ansprüche 1 bis 8, **dadurch gekennzeichnet, dass** der Graphit eine Körnung von 100 bis 300 µm aufweist.

10. Gleitlagerwerkstoff nach einem der Ansprüche 1 bis 9, **dadurch gekennzeichnet, dass** er zusätlich Sinterhilfsmittel aufweist.

11. Gleitlagerwerkstoff nach Anspruch 10, **dadurch gekennzeichnet, dass** er als Sinterhilfsmittel 1 bis 3 Gew.% MoS2 und/oder 0,5 bis 2 Gew.% CuP aufweist.

12. Gleitlagerverbundwerkstoff, **gekennzeichnet durch** ein Trägermaterial aus Stahl und/oder Bronze, auf dem ein Gleitlagerwerkstoff nach einem der Ansprüche 1 bis 11 aufgesintert ist.

13. Verwendung eines Gleitlagerverbundwerkstoffes nach Anspruch 12 für Trockenlauflager.

14. Verwendung nach Anspruch 13 für Radialgleitlager, Axialgleitlager, Gleitlager-Segmente, Gleitplatten, Gelenklager und/oder Lagerbuchsen.

## Claims

1. Sintered dry plain bearing material comprising a copper alloy, **characterised by**
from 10 to 15% by weight of tin
from 0.5 to 10% by weight of bismuth
from 5 to 12% by weight of graphite,
the remainder being copper,
the proportion of tin being > the proportion of bismuth and the graphite having a particle size with 99% < 40 µm.

2. Plain bearing material according to claim 1, **characterised in that** the proportion of bismuth is from 0.8 to < 5% by weight.

3. Plain bearing material according to either claim 1 or claim 2, **characterised in that** the proportion of bismuth is from 8 to 10% by weight.

4. Plain bearing material according to any one of claims 1 to 3, **characterised in that** the proportion of tin is > 10 to 13% by weight.

5. Plain bearing material according to any one of claims 1 to 4, **characterised in that** the proportion of tin is from 11 to 13% by weight.

6. Plain bearing material according to any one of claims 1 to 5, **characterised in that** the proportion of graphite is from 5.66 to 10.71% by weight.

7. Plain bearing material according to any one of claims 1 to 6, **characterised in that** the graphite is natural graphite.

8. Plain bearing material according to any one of claims 1 to 6, **characterised in that** the graphite is synthetic graphite.

9. Plain bearing material according to any one of claims 1 to 8, **characterised in that** the graphite has a particle size of from 100 to 300 µm.

10. Plain bearing material according to any one of claims 1 to 9, **characterised in that** it further has a sintering auxiliary.

11. Plain bearing material according to claim 10, **characterised in that** it has, as a sintering auxiliary, from 1 to 3% by weight of MoS₂ and/or from 0.5 to 2% by weight of CuP.

12. Plain bearing composite material, **characterised by** a carrier material comprising steel and/or bronze, on which there is sintered a plain bearing material according to any one of claims 1 to 11.

13. Use of a plain bearing composite material according to claim 12 for dry running bearings.

14. Use according to claim 13 for radial plain bearings, axial plain bearings, plain bearing segments, sliding plates, spherical plain bearings and/or bearing bushes.

## Revendications

1. Matériau de palier lisse sec fritté en un alliage de cuivre, **caractérisé par**
10 à 15 % en poids d'étain,
0,5 à 10 % en poids de bismuth,
5 à 12 % en poids de graphite,
le reste étant du cuivre ;
sachant que la proportion d'étain est > à la proportion de bismuth et que le graphite présente une granulométrie avec 99 % < 40 µm.

2. Matériau de palier lisse selon la revendication 1, **caractérisé en ce que** la proportion de bismuth est de 0,8 à < 5 % en poids.

3. Matériau de palier lisse selon l'une quelconque des revendications 1 ou 2, **caractérisé en ce que** la proportion de bismuth est de 8 à 10 % en poids.

4. Matériau de palier lisse selon l'une quelconque des revendications 1 à 3, **caractérisé en ce que** la proportion d'étain est de > 10 à 13 % en poids.

5. Matériau de palier lisse selon l'une quelconque des revendications 1 à 4, **caractérisé en ce que** la proportion d'étain est de 11 à 13 % en poids.

6. Matériau de palier lisse selon l'une quelconque des revendications 1 à 5, **caractérisé en ce que** la proportion de graphite est de 5,66 à 10,71 % en poids.

7. Matériau de palier lisse selon l'une quelconque des revendications 1 à 6, **caractérisé en ce que** le graphite est du graphite naturel.

8. Matériau de palier lisse selon l'une quelconque des revendications 1 à 6, **caractérisé en ce que** le graphite est du graphite synthétique.

9. Matériau de palier lisse selon l'une quelconque des revendications 1 à 8, **caractérisé en ce que** le graphite présente une granulométrie de 100 à 300 µm.

10. Matériau de palier lisse selon l'une quelconque des revendications 1 à 9, **caractérisé en ce qu'**il comporte en plus des auxiliaires de frittage.

11. Matériau de palier lisse selon la revendication 10, **caractérisé en ce qu'**il comporte comme auxiliaires de frittage 1 à 3 % en poids de MoS₂ et/ou 0,5 à 2 % en poids de CuP.

12. Matériau composite de paliers lisse, **caractérisé par** un matériau support en acier et/ou en bronze, sur lequel est fritté un matériau de palier lisse, selon l'une quelconque des revendications 1 à 11.

13. Utilisation d'un matériau composite de palier lisse selon la revendication 12 pour des paliers fonctionnant à sec.

14. Utilisation selon la revendication 13 pour des paliers lisses radiaux, pour des butées lisses, des segments de paliers lisses, des plaques de glissement, des paliers d'articulation et/ou des coussinets de palier.
